# EUROPEAN PATENT APPLICATION

(11) **EP 1 757 850 A1**
(43) Date of publication of application: **28.02.2007**
(21) Application number: 05255299.9
(22) Date of filing: 30.08.2005
(51) Int. Cl.: F16K 1/48

(54) **Fluid control valve device**

(30) Priority: 22.08.2005 US 209022
(71) Applicant: Dresser, Inc., Addison, TX 75001 (US)
(72) Inventor: Caprera, Brian J., Warwick Rhode Island 02889 (US)
(74) Representative: Howick, Nicholas Keith

(57) **Abstract**

A valve may include a plug (140) that is pivotable relative to a portion of a stem (130) so that the plug (140) is capable of aligning itself to the seat liner (160). In such circumstances, the valve may be manufactured to provide close guidance of the plug (140) proximal to the control surfaces and so as to reduce the sway of the plug (140) relative to the seat liner (160).

## Description

### TECHNICAL FIELD

This document relates to fluid control valve devices and to the manufacture of such devices.

### BACKGROUND

Some fluid systems use valves to control fluid flow. These fluid control valves may include a plug that is seated inside a valve housing between a fluid inlet and a fluid outlet. The plug can be moved within the valve housing to adjust the flow of fluid through the valve. For example, if a lower end of a plug is shifted toward a seat liner, the fluid flow may be restricted or closed. If the lower end of the plug is shifted away from the seat liner, the fluid flow may be opened. As used herein, fluid may include gas, liquid, solid particulates, or any combination thereof.

Several factors affect the design and manufacture of fluid control valves. For example, the location of the plug guide may affect the design and manufacture of a control valve. Typically, an upper portion of the plug is attached to a stem, which is slidably engaged with a guide bushing having tight clearance tolerances. Thus, the plug's reciprocating motion is substantially guided only from the upper end, thereby permitting some sway at the lower end of the plug where the control surfaces restrict the fluid flow. When the lower portion of plug is shifted away from the seat liner to open the fluid flow through the valve, the force of the fluid on the plug may cause the lower end of plug to sway laterally and impact the seat liner. Such an impact may cause vibration effects and damage to the liner, the plug, and other portions of the valve assembly.

The fluid type is another factor that may affect the design of the control valve components. For example, some gasoline refining applications require valves to control the flow of a high-temperature fluid including crude oil and erosive particulates, such as dirt and/or certain catalytic agents. As this erosive fluid flows through the valve, the components may be subjected to temperatures in excess of 500°F and, in some cases, in excess of 1000°F and pressure differential across the valve greater than 3000 psi, which result in high fluid velocities at the control surfaces of the valve. In such instances, the pressure drop across the valve may cause tremendous forces on the valve plug and seat liner, which can cause loud vibration noises and damaging impacts between the plug and the seat liner.

Selection of materials for the valve trim components, such as the plug and the seat liner, is another factor to be considered in the design of fluid control valves. The erosion of valve components by high-temperature and high-pressure fluids may lead to significant problems. For example, in some gasoline refining applications, high-temperature crude oil with erosive particulates require replacement of valve plugs made from a ductile metal about every six months. Even if the ductile metal can withstand the pressure differentials across the valve assembly and the impact energy caused by the motion of the plug relative to the seat liner, the erosive fluid can systematically wear away the control surfaces, thereby requiring replacement of the valve components. Rapid erosion of valve components results in significant maintenance and replacement costs.

### SUMMARY

Some embodiments of a fluid control valve may include a plug that is guided proximal to the fluid control constriction so as to reduce the sway of the plug relative to the seat liner, which may reduce the vibration effects and component damage caused by impacts between the plug and the seat liner. The valve plug may be pivotable relative to a valve stem so that the plug is capable of aligning itself to a seat liner. Such a configuration reduces the effect of the stack up of dimensional tolerances among manufactured components of the control valve. Thus, the fluid control valve may be manufactured to provide close guidance of the plug proximal to the control surfaces, yet may be manufactured without impracticable dimensional tolerances among the valve components.

In one illustrative embodiment, a flow control device may include a valve body having an internal cavity and a plug to control flow of fluid through the internal cavity. The plug may have a first end and a second end. The device may also include at least one plug guide disposed in the internal cavity. The plug guide may be slidably engaged with the plug proximal to the first end such that the plug is movable in a longitudinal direction from a first operative position to a second operative position. The device may further include a stem having a portion that is coupled to the plug proximal to the second end. The plug may be pivotable relative to the portion of the stem.

In another illustrative embodiment, a method of manufacturing a valve assembly may include coupling a plug to a portion of a stem such that the plug is pivotable relative to the portion of the stem. The plug may have at least one control surface formed proximal to a first end of the plug. The method may also include assembling the plug into an internal cavity of a valve body. The method may further include assembling at least one plug guide into the internal cavity of the valve body. The plug guide may have a guide surface to slidably engage the plug proximal to the first end.

These and other embodiments may be configured to provide one or more of the following advantages. First, the valve plug may be pivotable relative to a portion of the stem so that the plug is adapted to align itself to the seat liner's guiding surface during the longitudinal motion between opened and closed positions. In such circumstances, the fluid control valve may be manufactured to provide close guidance of the plug proximal to the control surfaces, yet may be manufactured without substantial limitations imposed by the accumulation of dimensional tolerances from the machined components. Second, plug's control surfaces and the guide surface of the seat liner can be configured to have a desirable flow velocity constriction without increasing the likelihood of components damage caused by vibrational impact. Third, the valve plug may be coupled to other components such that only compressive forces are applied to the plug. Such a design feature may be particularly useful in embodiments in which the plug comprises a ceramic material, Stellite® material (and other such specially designed alloys), or other materials that are generally more brittle than ductile (e.g., its ultimate compression strength is substantially larger than its ultimate tensile strength). Fourth, because the plug may be closely guided proximal to the fluid control constriction, the stem guide (if any stem guide is utilized) can be smaller and less costly. Also, the stem guide may be positioned further away from the control surfaces of the plug, thereby reducing the likelihood of erosive media entering the stem guide. Fifth, the plug and other valve trim components may be more readily rebuilt into valve devices that are already in the field because the pivotable connection of the plug may cause the alignment of machined features and clearances of the valve components to be less demanding. Sixth, the connection between the plug and the stem may be spring-loaded so as to provide a proper engagement even in circumstances where the thermal expansion of the plug is much lower than the thermal expansion of the stem. Seventh, in some high-pressure embodiments in which great seating loads and impacts are required to shut off the fluid flow, the valve device may be designed to include a metal-to-metal seat contact even though the plug and seat liner may comprise nonmetal materials that are resistant to the erosive effects of the fluid media. One or more of these and other advantages may be provided by the devices described herein.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG 1 is a perspective section view of a valve device.
FIG 2 is an enlarged partial cross-section view of the valve device of FIG 1 with a plug in an opened position.
FIG 3 is an enlarged partial cross-section view of the valve device of FIG. 1 with the plug in a closed position.
FIG 4 is a perspective section view of another valve device.
FIG 5 is an enlarged partial cross-section view of the valve device of FIG 4.
Like reference symbols in the various drawings indicate like elements.

### DETAILED DESCRIPTION

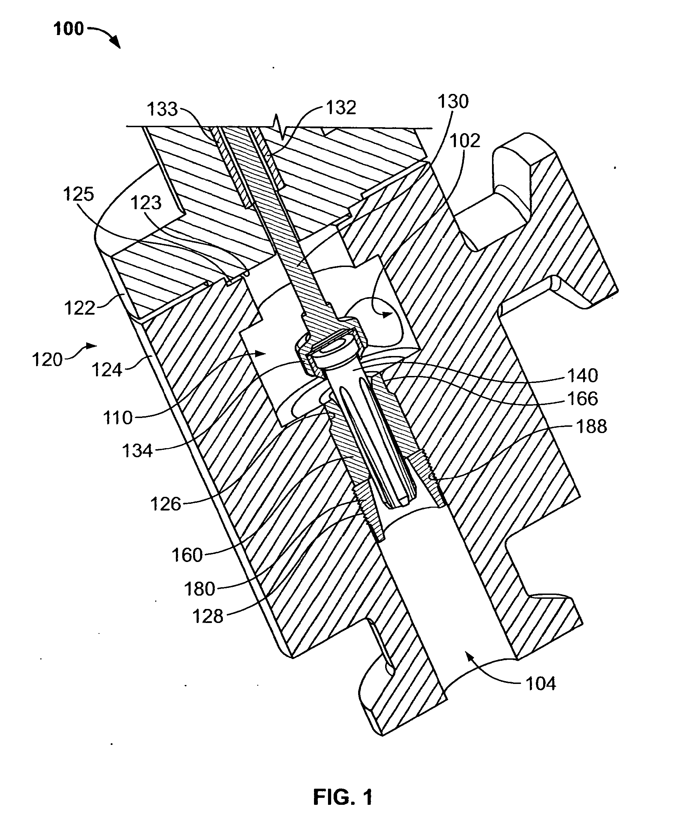

Referring to FIGS. 1-2, a valve device 100 includes a valve body 120 that can be assembled from one or more body portions. In the embodiment shown in FIG. 1, the valve body 120 comprises an upper body portion 122 and a lower body portion 124 that are configured to mate with one another. Both body portions 122 and 124 may comprise a high-strength metal material that is capable of withstanding the flow of high-temperature fluids. In this embodiment, the upper body portion 122 and the lower body portion 124 are configured to mate with one another when a male extension 123 is engaged with complementary inset groove 125. Such a configuration provides for proper alignment of the upper and lower body portions 122 and 124. It should be understood that embodiments of the valve body 120 are not limited to the configuration depicted in FIG 1 and that the valve body 120 can be assembled in other configurations so that the body portions are properly aligned.

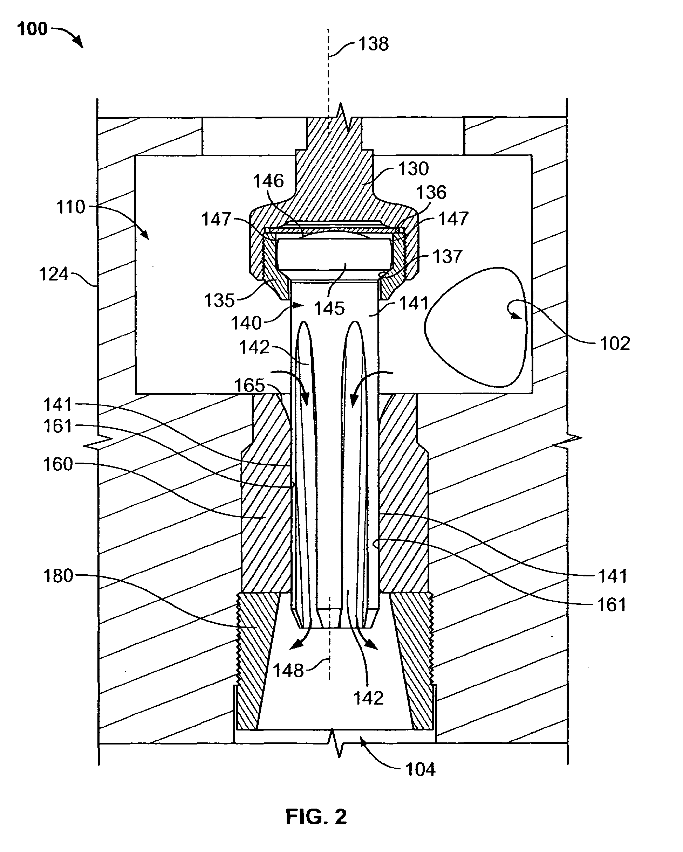

The valve body 120, when fully assembled, includes an internal cavity 110 in which certain components are disposed. In the embodiment shown in FIG 1, a stem 130, a plug 140, seat liner 160, and an outlet liner 180 may be disposed in the internal cavity 110 of the valve device 100. At least an upper portion 132 of the stem 130 may extend through the upper body portion 122 of the valve body 120 so that an actuator or other device may engage the upper stem portion 132. In such circumstances, the upper stem portion 132 may be slidably engaged with a stem guide 133. The stem guide 133 can serve to guide the longitudinal motion of the stem 130, to seal the stem bore, or both. The lower stem portion 134 may be disposed in the valve body 120 and may include one or more components to engage the plug 140. For example, the lower stem portion 134 may include a carrier member 135 (FIGS. 2-3) that engages the plug 140. As described in more detail below, the plug 140 may be pivotably engaged with the stem 130. Accordingly, the upper stem portion 132 may be actuated to reciprocate or otherwise move the plug 140, and the plug 140 may pivotably adjust relative to the stem 130 so as to align with the guide surfaces of the seat liner 160. In such embodiments, the seat liner 160 serves as a plug guide so that the plug 140 may be closely guided proximal to the control surfaces even if the axis of the stem 130 is not perfectly aligned with the axis of the seat liner 160. It should be understood that, in some embodiments, a valve device may not include a seat liner, in which case the seat itself may be configured to slideably engage and closely guide the plug 140 proximal to the control surfaces 142.

The valve device 100 may include at least one input port 102 and at least one output port 104. The input port 102 and output port 104 may be configured to mate with adjoining equipment. For example, the input port 102 or the output port 104 may include internal or external threads, flanges, or other mechanical connectors used to engage a tube, pipe, hose, or port from another piece of equipment. In operation, fluid is communicated through the input port 102 and into the internal cavity 110. Depending on the position of the plug 140 in the internal cavity 110, the fluid may pass between the plug 140 and the seat liner 160 to the output port 104. Alternatively, the plug 140 may be positioned so that fluid flow is blocked (described in more detail below in connection with FIGS. 2-3). As shown in the embodiment depicted in FIG 1, the input port 102 may be offset from the centerline of the stem 130 so that fluid entering the internal cavity 110 from the input port 102 does not necessarily impinge directly on the plug 140. It should be understood that the input port 102 and output port 104 are not limited to the configuration and orientation shown in FIG 1 and that other types and orientations of ports may be used to permit fluid flow into and out of the internal cavity 110 of the valve body 120.

The plug 140, the seat liner 160, or both may comprise a ceramic material or other material that is more brittle than ductile (e.g., its ultimate compression strength is substantially larger than its ultimate tensile strength). In general, ceramic and other brittle materials perform better under compressive stresses than in conditions where tensile stresses can cause crack propagation and fracture. Also, ceramic and other brittle materials may be more resistant to erosive fluids when the fluid flows substantially parallel to the ceramic surface (rather than flowing at a high velocity normal to the ceramic surface and impacting the ceramic surface). This erosion resistance characteristic may be more apparent when the fluid is a high-temperature, high-velocity fluid having erosive particulates. Certain embodiments of the flow control valve may utilize one or more of these or other characteristics of ceramic materials or other brittle materials to provide a valve device that has a longer operation life and a reduced likelihood of catastrophic failure.

Referring to FIGS. 1-2, the seat liner 160 may be disposed in the internal cavity 120 and retained against a pilot surface 126 of the lower body portion 124. For example, the seat liner 160 may be inserted through the outlet port 104 into the internal cavity 110 so that a circumferential surface 166 rests against a mating pilot surface 126 of the lower body portion. The outlet liner 180 may secure the seat liner 160 in its operational position by inserting the outlet liner 180 through the outlet port 104 and engaging the threads 188 of the outlet liner 180 with the mating threads 128 on the lower body portion 124. As such, the outlet liner 180 may, in combination with the pilot surface 126, orient and retain the seat liner 160 in its operational position.

Fluid may flow from the input port 102 to the output port 104 of the valve device 100 when the plug 140 is disposed in an opened position. In such circumstances, fluid may flow into the internal cavity 100 and along the control surfaces 142, which are the surfaces that are exposed to the fluid flow along the valve trim where the fluid flow area is constricted (e.g., where the fluid velocity is substantially increased). In the embodiment depicted in FIG. 2, the plug's control surfaces 142 of the plug 140 may include one or more grooves formed in the outer circumferential surface 141 of the plug 140. The grooves may be substantially parallel to one another and may extend in the longitudinal direction. Accordingly, when the plug 140 is shifted to an open position, the fluid flows in the grooves (between the plug's control surfaces 142 and the inner surface 161 of the seat liner 160) substantially in the longitudinal direction. As such, the fluid flows over the control surfaces 142 of the plug 140 in a direction that is substantially parallel to the control surfaces 142 (and the inner surface 161 of the seat liner 160). Because ceramic materials (and other brittle materials) may be more erosion resistant when the fluid flows substantially parallel to the exterior surface, such embodiments of the plug 140 may increase the operational life of the valve device 100 while taking advantage of the erosion resistant characteristics of the ceramic material (or other brittle material).

In addition, some embodiments of the plug 140 comprising ceramic or other brittle material may be manufactured using relatively straightforward machining techniques. For example, the ceramic plug 140 may be manufactured without the costly tooling that is often required for ceramic material machining. First, the base part that ultimately forms the plug 140 may be a basic cylinder or shaft of ceramic material. Molding and sintering a base shape of such a relatively simple shape is generally less costly than forming a ceramic base part having more complex geometries. Second, the grooves in the ceramic plug 140 may be formed in situ or cut into the base shape using relatively noncomplex cuts from a circular saw blade, a grinding disc, or the like. The length and depth of the grooves that at least partially define the control surfaces 142 may be selected according to the desired flow characteristics of the valve device 100.

It should be understood that the configuration of the plug 140 and seat liner 160 is not limited to the embodiment depicted in FIG. 2. For example, the size of the plug 140 and seat liner 160 may be adjusted to reduce the unit load that is applied to the plug 140 and the seat liner. The exterior surface 141 of the plug 140 and inner surface 161 of the seat liner 160 may have an increased length, which may increase the overall guiding surface area. In some cases, such an increase in the guiding surface area can reduce the unit load stress from vibrational impact between the plug 140 and the seat liner 160. Also, longer guiding surfaces may provide a more precise guidance of the plug 140 proximal to the control surfaces 142. In another example, the depth and the width of the grooves that at least partially define the control surfaces 142 may be adjusted to provide the desired flow characteristics. In some embodiments, the width of the grooves may be increased to reduce the likelihood of particulate conglomerates gathering between the plug 140 and the seat liner 160.

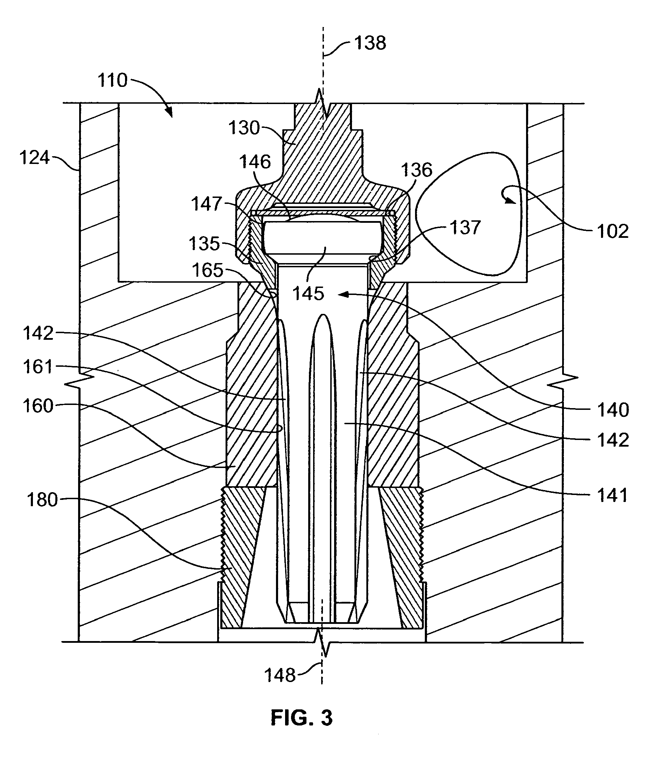

Referring to FIGS. 2-3, the plug may be shifted between any partially or fully opened position (refer, for example, to FIG. 2) and a closed position (refer, for example, to FIG. 3) in which the fluid path between the input port 102 and the output port 104 is sealed. As previously described, the stem 130 may be engaged with an actuator or other device that causes the stem to move within the internal cavity 110. Such actuation of the stem 130 causes the plug 140 to move relative to the seat liner 160. In the embodiment shown in FIGS. 2-3, the plug 140 is moved to a opened position when the plug head 145 is shifted a distance sufficiently away from the seat liner 160 (as shown, for example, in FIG. 2). In some embodiments, the plug 140 may remain slidably engaged with the seat liner 160 even when the plug is in the opened position, thereby permitting close guidance of the plug 140 proximal to the control surfaces 142 while the plug 140 is at the opened position. Also in the embodiment shown in FIGS. 2-3, the plug is moved to a closed position when the plug head 145 is shifted a sufficient distance toward the seat liner 160 (as shown, for example, in FIG. 3). During the plug's longitudinal motion between the opened and closed positions, the plug 140 may remain slidably engaged with the seat liner 160 so that the plug 140 is closely guided throughout the longitudinal path. In the embodiments shown in FIG. 3, when the plug 140 is moved to the closed position, a carrier member 135 or another component may press against a mating surface 165 of the seat liner 160 so as to form a seal. The seal between the carrier member and the mating surface 165 may prevent the fluid from passing between the input port 102 and the output port 104, thereby closing the valve device 100 from fluid flow.

The plug 140 may be guided proximal to the control surfaces 142 by the inner surface 161 of the seat liner 160. The clearance between the outer circumferential surface 141 of the plug 140 and the inner surface 161 of the seat liner 160 may be sufficiently small so that the plug 140 is closely guided by the seat liner 160. In operation, the stem 130 may be actuated to cause the plug 140 to reciprocate relative to the seat liner 160. The circumferential surface 141 of the plug 140 may be slidably engaged with the seat liner surface 161 so as to guide the plug 140 as it moves between an opened position and a closed position. In some circumstances, the close tolerances of the plug 140 proximal to the plug's control constriction surfaces may limit the ability of the plug 140 to sway laterally and impact the seat liner 160, thereby reducing the likelihood of vibration effects and damage to the liner 160, the plug 140, and other components of the valve device 100.

Because the plug 140 may pivot relative to the stem 130 so as to align itself with the guiding surface 161 of the seat liner 160, the plug 140 may be closely guided proximal to the control surfaces even if the guidance and alignment of the stem 130 is not precise. Accordingly, the upper stem guide 133 may be smaller in size and may have less demanding manufacturing tolerances, which can reduce the cost of the upper stem guide 133 and its assembly into the valve device 100. In one example, the upper stem guide may comprise a firmly packed, graphite rope material that serves as both a guide and a wiper seal for the upper stem portion 134. Also, the upper stem guide 133 may be positioned further away from the fluid flow in the internal cavity 110, which can reduce the erosive wear upon the upper stem guide 130.

Still referring to FIGS. 2-3, the plug may be pivotably engaged with the stem 130 so that the plug 140 is capable of aligning itself to the seat liner 160. As shown in the embodiments shown in FIGS. 2-3, the lower stem portion 134 may include a carrier member 135 that retains the plug head 145 in a cavity at least partially defined by the carrier member 135. The carrier member 135 may be releasably coupled to the stem body by mating threads. The stem 130 may also comprise a spring member 136 that is positioned to engage a portion of the plug head 145 and to bias the plug head 145 against a surface 137 of the carrier member 135. The spring member 136 may be disc-shaped and may comprise a metallic material that is capable of firmly biasing the plug head 145 against the surface 137 of the carrier so as to reduce the likelihood of vibration or other unexpected movement between the plug head 145 and the carrier member 135. For example, in circumstances where high temperature fluids are flowing through the internal cavity 110, the thermal expansion of the plug head 145 may be dissimilar from the thermal expansion of the carrier member 135. In those circumstances, the spring member 136 may be used to account for the difference in thermal expansion of these components by maintaining a bias of the plug head 145 against the surface 137 of the carrier member 135. In some embodiments, the spring member 136 may comprise an Elgiloy® material (supplied by Elgiloy Specialty Metals of Elgin, IL) or another similar material that is capable of maintaining the desired spring force at elevated operating temperatures.

The plug head 145 may be configured to pivot within the cavity of the carrier member 135. In some embodiments, the plug head 145 may include a spherical top surface 146 that slidably engages the spring member 136. The plug head 145 may also include a curved side surface 147 that slidably engages at least one inner wall of the carrier member 135. The spherical top surface 146 and the curved side surface 147 may have a substantially similar radius of curvature, which permits the surfaces 146 and 147 to slidably adjust in a motion that is somewhat similar to a ball-and-socket engagement. As such, the plug head 145 may swivel or otherwise adjust within the cavity of the carrier member 135, which permits the plug 140 to align itself to the seat liner's inner surface 161 during the longitudinal motion of the plug 140.

In some circumstances, the stem 130 may be not perfectly aligned with the seat liner 160. For example, the manufacturing dimension tolerances of the stem 130, the stem guide 133, the upper body portion 122, the lower body portion 124, the seat liner 160, and other components may cause the final assembly of the these machined components to have a significant tolerance stack-up. Such a stack-up of dimensional tolerances may cause the stem 130 to be slightly nonaligned with the seat liner 160 after the valve device 100 is fully assembled. However, the pivoting engagement between the plug 140 and the stem 130 may permit the plug 140 to align itself with the seat liner 160 (which serves as a plug guide) even if the stem 130 is slightly nonaligned with the seat liner 160. For example, if the central axis 138 of the stem 130 is not aligned with the central axis 148 of the plug 140, the plug 140 may pivot relative to the stem 130 as the plug 140 is shifted between the opened and closed positions. The plug's pivoting engagement with the stem 130 and the plug's slidable engagement with the seat liner 160 may collectively permit the plug 140 to be closely guided by the seat liner 160. Accordingly, the valve device 100 may be manufactured to provide close guidance of the plug 140 proximal to the control surfaces 142, yet may be manufactured without substantial limitations imposed by the accumulation of dimensional tolerances from the machined components. It should be understood that, in some embodiments, a valve device may not include a seat liner, in which case the seat itself may be configured to serve as a plug guide proximal to the control surfaces 142.

In addition, some valve components such as the plug 140 and the seat liner 160 may be replaced while the valve device 100 is in the field. Replacing only certain components and reassembling the valve device 100 may cause the stem 130 to be slightly nonaligned with the seat liner 160. As previously described, the pivoting engagement between the plug 140 and the stem 130 may permit the plug 140 to align itself with the seat liner 160 even if the stem 130 is slightly nonaligned with the seat liner 160. Thus, in some embodiments, the pivoting engagement between the plug 140 and the stem 130 may simplify the maintenance and reassembly of the of valve device 100 that is operating in the service field.

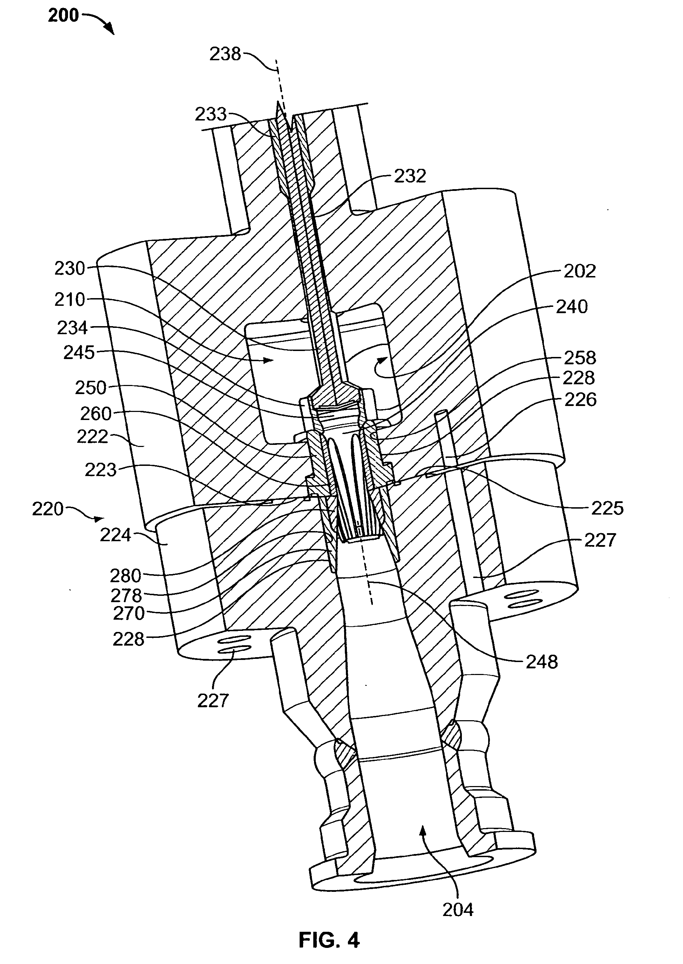

Referring now to FIG. 4, another embodiment of a valve device 200 may also include a plug 240 that is pivotable relative to a stem 230. The valve device 200 includes a valve body 220 that can be assembled from one or more portions. In this embodiment, the valve body 220 comprises an upper body portion 222 and a lower body portion 224, which are configured to mate with one another so that a substantially planar radial surface 223 of the upper body portion 222 presses against a complementary surface 225 of the lower body portion. Use of a fastener (not shown in FIG. 4) inserted into the threaded cavities 226 and threaded apertures 227 may provide for proper alignment of the upper and lower body portions 222 and 224.

The valve body 220, when fully assembled, may include an internal cavity 210, a stem 230, an upper stem guide 233, a plug 240, a seat liner 260, an outlet liner 280, and other components. Similar to the previously described embodiments, the plug 240 may be shifted between any partially or fully opened position and a closed position (as shown in FIG. 4) in which the fluid path between the input port 202 and the output port 204 is sealed. The upper stem portion 232 may be guided by the upper stem guide 233 and may be engaged with an actuator or other device that causes the stem 230 to move within the internal cavity 210. Such actuation of the stem 230 causes the plug 240 to move relative to the seat liner 260. The plug 240 may be pivotably engaged with the stem 230 so that the plug 240 is capable of aligning itself to the seat liner 260. In such embodiments, the seat liner may serve as a plug guide so that the plug 240 can be closely guided proximal to the control surfaces 242 even if the axis of the stem 230 is not perfectly aligned with the axis of the seat liner 260. For example, if the central axis 238 of the stem 230 is not aligned with the central axis 248 of the plug 240, the plug 240 may pivot relative to the stem 230 as the plug 240 is shifted between the opened and closed positions. It should be understood that, in some embodiments, a valve device may not include a seat liner, in which case the seat itself may be configured to serve as a plug guide proximal to the control surfaces 242 of the plug 240.

Still referring to FIG. 4, in this embodiment, the plug 240, the seat liner 260, and the outlet liner 280 may comprise a ceramic material or a similar material that is more brittle than ductile and sufficiently erosion-resistant. The seat liner 260 and the outlet liner 280 may be retained in an associated carrier 250 and 270, respectively, which are also disposed in the internal cavity 210. The carriers 250 and 270 may have an outer circumferential surfaces 258 and 278, respectively, that engage corresponding pilot surfaces 228 of the valve body 220. As such, the seat liner 260 and the outlet liner 280 can be properly aligned for the plug 240 to move longitudinally through the seat liner 260 and the outlet liner 280. The carriers 250 and 270 may comprise a metal material that engages the outer circumferential surface of the seat liner 260 of the outlet liner 280. Such an embodiment permits each carrier 250 and 270 to engage the associated liner 260 and 280, respectively, with a heat-shrunk compression fit connection. As previously described, the liners 260 and 280 may comprise a ceramic material. Because the ceramic material may perform better under compressive conditions, the compression fit engagement between each carriers 250 and 270 and the associated ceramic liner 260 and 280, respectively, eliminates or reduces any tensile stress concentrations that may be imposed on the ceramic material during assembly of the valve device 200.

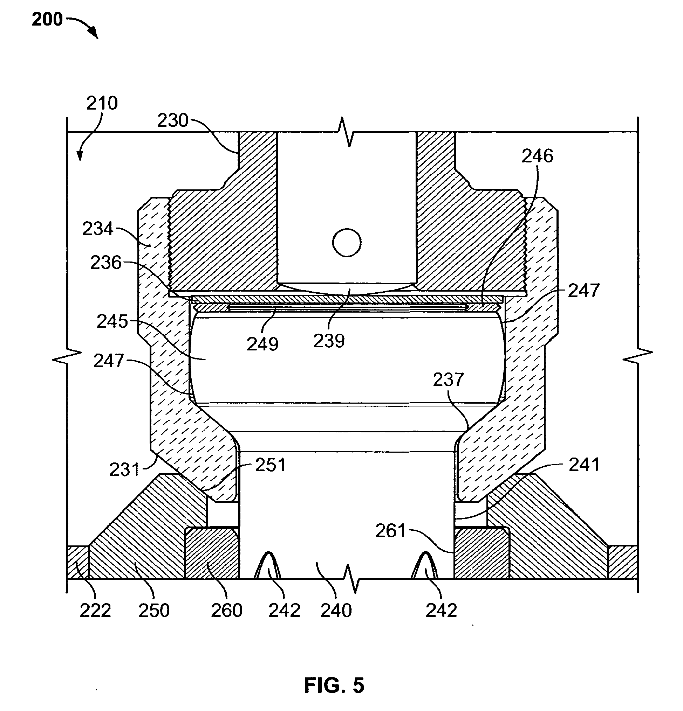

Referring to FIG. 5, the valve device 200 may provide a metal-to-metal seat contact surface when the fluid flow is closed. In some circumstances in which the fluid in the internal cavity 210 is at a high pressure, the seal load that is necessary to form a seal and close the fluid flow can be significant. In such cases, a metal-to-metal seat contact may be capable of enduring the significant seat loads. As shown in FIG. 5, the stem 230 may include a lower stem portion 234 that has a sealing surface 231 configured to mate with a sealing surface 251 of the carrier 250. Both the lower stem portion 234 and the carrier 250 may comprise a metallic material that is capable of enduring impact loads when the plug 240 is moved to the closed position and the sealing surfaces 231 and 251 contact one another. In some embodiments, when the lower stem portion 234 approaches the carrier 250 to close the fluid flow, the grooves that at least partially define the control surfaces 242 in the plug 240 may have a reduced depth at that point to restrict the flow of fluid. Thus, the flow of fluid through the valve device 200 can be substantially restricted immediately before the lower stem portion 234 contacts the carrier 250 to close the flow of fluid. Such embodiments may improve the quality of the metal-on-metal seal and may also reduce the erosive wear on the seal surfaces 231 and 251.

As previously described, the plug 240 may be pivotably engaged with the stem 230 so that the plug 240 is capable of aligning itself to the seat liner 260. In the embodiment shown in FIG. 5, the stem 230 may include a lower stem portion 234 that retains the plug head 245 in a cavity at least partially defined by the lower stem portion 234. The lower stem portion 234 may be releasably coupled to the stem body by mating threads or other engagement mechanism. The stem 230 may also comprise a spring member 236 that is positioned to bias the plug head 245 against a surface 237 of the lower stem portion 234. In some embodiments, the spring member 236 may be used to account for the difference in thermal expansion of the plug head 245 and the lower stem portion 234 by maintaining a bias of the plug head 245 against the surface 237 of the lower stem portion 234. In one example in which fluid flow in the internal cavity 210 is at a high temperature, the spring member 236 may comprise an Elgiloy® material or another similar material that is capable of maintaining the desired spring force at elevated operating temperatures.

Still referring to FIG. 5, the plug head 245 may be configured to pivot within a cavity at least partially defined by the lower stem portion 234. In some embodiments, the plug head 245 may include a cavity 249 proximal to the top surface 246. A spherical tip portion 239 of the stem 230 slideably engages the spring member 236 that is disposed over the cavity 249 of the plug head 245. The plug head 245 may also include a curved side surface 247 that slidably engages at least one inner wall of the lower stem portion 234. The spherical tip portion 239 and the curved side surface 247 may have a substantially similar radius of curvature. As such, the tip portion 239 and the side surface 247 can slidably adjust so that the plug head 245 shifts relative to lower stem portion 234 in a motion that is somewhat similar to a ball-and-socket engagement. As such, the plug head 245 may swivel or otherwise adjust relative to the lower stem portion 234, which permits the plug 240 to align itself to the seat liner's inner surface 261 during the longitudinal motion of the plug 240.

In some embodiments, the valve device 200 may be configured to be used in refining applications to control the flow of erosive fluid. For example, some refining applications include an erosive fluid that comprises crude oil with erosive particulates (e.g., dirt and/or catalyzing agents). The valve device 200 may control this erosive fluid under conditions where the fluid is heated to a temperature of about 600°F to about 1,200°F and the pressure drop across the valve device could be in the range of about 1,000 psi to about 3,500 psi. In such circumstances, the valve device 200 may have an input port size from about 1 inch to about 8 inches in diameter, and in some embodiments, the input port could be as large as 24 inches in diameter. Furthermore, certain embodiments of the plug 240 may have a longitudinal length of more than 6 inches, and the internal cavity 210 of the valve body 220 is sufficiently sized to retain such a plug 240. In these embodiments, the fluid may flow through the control constriction in a direction that is substantially parallel to the control surfaces 242 of the plug 240, which can increase the operational life of the trim components in the valve device 200.

In some alternative embodiments, the plug 240, the seat liner 260, and the outlet liner 280 may comprise another material that has characteristics similar to ceramic materials. For example, the plug and liners may comprise a certain tooling steel or a Stellite® material, which is a specially designed alloy supplied by Deloro Stellite, Inc. of Belleville, Ontario. Similar to ceramic materials, some tooling steels and the Stellite® material are generally more brittle than ductile (e.g., its ultimate compression strength is substantially larger than its ultimate tensile strength), very hard, and sufficiently resistant to erosive fluids. Because the plug and liners may operate substantially free of tensile stress concentrations, the likelihood of crack propagation or tensile fracture in the substantially brittle and hard material is reduced.

A number of embodiments of the invention have been described. Nevertheless, it will be understood that various modifications may be made without departing from the spirit and scope of the invention. Accordingly, other embodiments are within the scope of the following claims.

## Claims

1. A flow control device, comprising:
a valve body having an internal cavity;
a plug to control flow of fluid through the internal cavity, the plug having a first end and a second end;
at least one plug guide disposed in the internal cavity, the plug guide being slidably engaged with the plug proximal to the first end such that the plug is movable in a longitudinal direction from a first operative position to a second operative position; and
a stem having a portion that is coupled to the plug proximal to the second end, wherein the plug is pivotable relative to the portion of the stem.

2. The device of claim 1, wherein plug is pivotable relative to the portion of the stem such that, when the plug moves in the longitudinal direction between the first operative position and the second operative position, the plug is operable to align itself to the plug guide.

3. The device of claim 1, wherein the plug comprises a plug head proximal to the second end, the plug head having at least one curved surface to slidably engage the portion of the stem so that the plug is operable to pivot relative to the portion of the stem with a ball-and-socket engagement.

4. The device of claim 3, wherein the portion of the stem comprises a spring member to bias the plug head against a surface of the portion of the stem.

5. The device of claim 1, wherein the plug comprises one or more control surfaces proximal to the first end.

6. The device of claim 5, wherein the plug guide is slidably engaged with the plug proximal to the control surfaces when the plug is in an opened position and when the plug is in a closed position.

7. The device of claim 5, wherein the plug guide comprises a seat liner that is slidably engaged with the plug proximal to the control surfaces.

8. The device of claim 5, wherein the control surfaces are at least partially defined by a plurality of grooves formed in an outer surface of the plug, the grooves extending substantially in the longitudinal direction.

9. The device of claim 8, wherein, when the fluid flows along the control surfaces, the plug operates substantially free of tensile stress concentrations along the control surfaces.

10. The device of claim 1, wherein the plug comprises a material having an ultimate compression strength larger than its ultimate tensile strength.

11. A method of manufacturing a valve assembly, comprising:
coupling a plug to a portion of a stem such that the plug is pivotable relative to the portion of the stem, the plug having at least one control surface formed proximal to a first end of the plug;
assembling the plug into an internal cavity of a valve body; and
assembling a seat liner into the internal cavity of the valve body, wherein the seat liner slidably engages the plug proximal to the first end.

12. The method of claim 11, wherein when the plug is slidably engaged with the seat liner, the plug is movable in a longitudinal direction from a first operative position to a second operative position.

13. The method of claim 12, wherein when the plug moves in the longitudinal direction between the first operative position and the second operative position, the plug is operable to pivot relative to the portion of the stem to align the plug to the seat liner.

14. The method of claim 12, further comprising coupling the plug to the portion of the stem such that, when the stem is moved relative to the valve body, the plug is moved in the longitudinal direction relative to the seat liner.

15. The method of claim 11, wherein coupling the plug to the portion of the stem comprises positioning a plug head having at least one curved surface to slidably engage the portion of the stem so that the plug is operable to pivot relative to the portion of the stem with a ball-and-socket engagement.

16. The device of claim 15, wherein coupling the plug to the portion of the stem further comprises biasing the plug head against a surface of the portion of the stem.

17. The method of claim 11, wherein the control surfaces of the plug are at least partially defined by a plurality of grooves formed in an outer surface of the plug, the grooves extending substantially in a longitudinal direction.

18. The method of claim 11, further comprising:
forming the plug from a substantially cylindrical base part from a material with an ultimate compression strength larger than its ultimate tensile strength, and
milling grooves in a portion of the circumferential surface thereof.

19. The method of claim 11, further comprising forming the seat liner from a tubular base part from a material with an ultimate compression strength larger than its ultimate tensile strength.

20. The method of claim 19, further comprising engaging the seat liner with a carrier using a heat-shrink compression fit.
